Europäisches Patentamt

European Patent Office

Office européen des brevets

(11) Publication number: **0 375 239 B1**

# EUROPEAN PATENT SPECIFICATION

(45) Date of publication of patent specification: **09.02.94**  (51) Int. Cl.⁵: **A23L 1/24**, A23L 1/308

(21) Application number: **89312918.9**

(22) Date of filing: **11.12.89**

(54) **Emulsified oil dressing product containing mixture of low calorie fat material and triglyceride oil.**

(30) Priority: **20.12.88 US 287247**

(43) Date of publication of application:
**27.06.90 Bulletin 90/26**

(45) Publication of the grant of the patent:
**09.02.94 Bulletin 94/06**

(84) Designated Contracting States:
**AT BE CH DE ES FR GB GR IT LI LU NL SE**

(56) References cited:
**US-A- 3 600 186**
**US-A- 4 423 084**

(73) Proprietor: **THE PROCTER & GAMBLE COMPANY**
**One Procter & Gamble Plaza**
**Cincinnati Ohio 45202(US)**

(72) Inventor: **Whelan, Richard Howard**
**7 Westview Road**
**Medfield Massachusetts 02052(US)**
Inventor: **Rudolf, Marvin Jerry**
**33 Manomet Road**
**Sharon Massachusetts 02067(US)**
Inventor: **Petrossian, Vanik Derenig**
**71 East Ouinobequin Road**
**Waban Massachusetts 02168(US)**

(74) Representative: **Gibson, Tony Nicholas et al**
**Procter & Gamble (NTC) Limited**
**Whitley Road**
**Longbenton Newcastle upon Tyne NE12 9TS**
**(GB)**

**Description**

This application relates to an emulsified oil dressing product wherein the fat component is a mixture of a low calorie fat material and a triglyceride oil.

Emulsified oil dressings typically refer to three generally recognized types of dressings: mayonnaise, salad dressing, and French dressing. Mayonnaise is an emulsified semi-solid food prepared from vegetable oil(s), one or more acidifying ingredients, one or more egg yolke-containing ingredients, as well as other optional ingredients such as salt, sweeteners, spices, monosodium glutamate, sequestrants, etc. Mayonnaise, by definition contains, not less than 65% by weight vegetable oil, although most commercial mayonnaise products contain approximately 80% by weight vegetable oil. Because of this relatively high level of oil, mayonnaise products are relatively high in calories, and are not particularly suitable for persons needing to restrict their caloric intake.

A lower calorie version of emulsified oil dressing products are salad dressings. Salad dressings are often similar to mayonnaise in consistency and texture (e.g. spreadability) and contain not less than 30% by weight vegetable oil. Most commercial salad dressing products contain approximately 45% by weight vegetable oil, or about one-half that of most commercial mayonnaise products. Salad dressings differ from mayonnaise also in the fact that they contain a starch-paste component which provides the consistency and texture that would be missing as the result of the lower vegetable oil level. Because of this reduction in the level of vegetable oil, salad dressings are less caloric than mayonnaise.

While salad dressing products are useful to those needing to restrict their intakes of calories, it would be desirable to further reduce the level of vegetable oil in such products, while at the same time maintaining the desired consistency and texture. For example, U.S. Patent 3,600,186 to Mattson et al, issued August 17, 1971, discloses low calorie food compositions, including mayonnaise and salad dressing products, wherein at least a portion of the fat is replaced with certain nonabsorbable, nondigestible polyol polyesters. These polyol polyesters are typically formed by esterifying sugars or sugar alcohols having from 4 to 8 hydroxy groups with fatty acids having from 8 to 22 carbon atoms. At least four of these hydroxy groups are esterified with the fatty acids in order to make the resulting sugar or sugar alcohol polyester nonabsorbable and nondigestible.

It would particularly be desirable to replace as such of the vegetable oil in the mayonnaise or salad dressing with such non-absorbable/nondigestible polyesters. However, it has been found that there are limits to the amount of such polyesters which can be substituted for the vegetable oil, while maintaining the desirable consistency and texture, especially spreadability, of the product. For example, in an emulsified oil dressing containing a total of approximately 80% fat, only up to 33% nonabsorbable nondigestible polyesters can be substituted for the vegetable oil before spreadability of the product is significantly affected. Accordingly, it would be desirable to develop a way to include higher levels of nonabsorbable/nondigestible polyesters in emulsified oil dressing products, without having to sacrifice desirable consistency and texture, in particular spreadability.

BACKGROUND ART

U.S. Patent 3,600,186 to Mattson et al, issued August 17,1971, discloses sugar and sugar alcohol polyesters useful as a partial or complete replacement for triglyceride fats in fat containing food products, including mayonnaise. See Col. 6, lines 59-61. Example 5 discloses a mayonnaise product where the fat component (75% of total product) is comprised of a 75:25 blend of erythritol tetraesters and refined cottonseed oil. Example 6 discloses a salad dressing product where the fat component (50% of total product) is xylitol pentaoleate and which appears to contain a paste system based on cornstarch and water. See also U.S. Patent 4,582,715 to Volpenhein, issued April 15, 1986, which discloses similar mayonnaise and salad dressing products where the fat component comprises alpha-acylated triglycerides, such as tri-alpha-oleoyloxylaurate, as partial or complete replacements for triglyceride fats.

U.S. Patent 4,508,746 to Hamm, issued April 2, 1985, discloses low calorie edible oil substitutes which are obtained by esterifying 2 to 4 carboxylic acid groups of a thermally stable polycarboxylic acid with saturated or unsaturated alcohols having straight or branched carbon chains of from 8 to 30 carbon atoms. These low calorie oil substitutes are taught to be useful, when combined with other ingredients, in mayonnaise and pourable salad dressings. See Col. 2, line 68, to Col. 3, line 3.

U.S. Patent 4,582,927 to Fulcher, issued April 15, 1986, discloses synthetic edible oils in the form of diesters of dicarboxylic acids, such as hexadecyl dioleylmalnote and dihexadecyl dioleylmalonate. These diesters are taught to be suitable as substitutes for natural oils in spreads such as mayonnaise. See Col 3, line 18-20.

2

U.S. Patent 3,955,010 to Chozianin et al, issued May 4, 1976, discloses emulsified oil dressing products such as mayonnaise, salad dressing, and french dressing where the fat component is based on a standard triglyceride fat or oil. Salad dressings are defined as emulsified foods prepared from an edible vegetable oil, and acidifying ingredients such as vinegar, lemon juice or lime juice, and egg yolk containing ingredients in a cooked or partially cooked starch paste prepared from food starch, tapioca flour, wheat flour, rye flour, or combinations of these starchy materials and water.

U.S. Patent 4,140,808 to Jonson, issued Feb. 20, 1979, discloses low calorie mayonnaise and dressing-type products which comprise oil, egg yolk vinegar, mustard and spices. This patent teaches that industrially manufactured products of this type also contain acetic acid, sugar, salt, thickener, preservatives, and dyes. Amongst the suitable thickeners listed are starch and chemically modified starches.

DISCLOSURE OF THE INVENTION

The present invention relates to emulsified oil dressing products, in particular salad dressing products, which are lower in calories, yet have the desired consistency and texture, and particularly spreadability, of mayonnaise products. These products comprise:

a. from 30% to 65% by weight of a fat component comprising:

1. from 50% to 90% by weight of the fat component of an edible, wholly or partially nondigestible low calorie fat material having:

(a) a viscosity of from about 0.5 to 800 poise at 100°F (37.8°C) and at a shear rate of 10 seconds$^{-1}$;

(b) a liquid/solid stability of at least 30% at 100°F (37.8°C); and

(d) a Solid Fat Content of not more than 30% at 98.6°F (37°C).

2. from 10% to 50% by weight of the fat component of a triglyceride oil;

b. from 30 to 60% of a salad dressing paste component comprising:

1. a thickener selected from starches, edible gums, and mixtures thereof; and

2. water.

A. Definitions

By "low calorie fat materials" is meant edible materials which can replace triglyceride fats or oils in the human diet. These materials provide the benefits of triglyceride fats and oils, i.e., lubricity and flavors.

By "wholly nondigestible" is meant that substantially all of the material is not digested by the body. It passes through the digestive system substantiality the same as when it was ingested. The term "partially nondigestible" means that at least 30% of the material is not digested. Preferably at least 70% of the material is not digested.

By "liquid/solid stability" as used herein is meant that the liquid portion of the material does not readily separate from the solid portion at body temperature, i.e., the material appears to be a solid even though up to 95% or more of it is liquid. Liquid/solid stability is measured by centrifuging a sample of the material at 60,000 rpm for one hour at 100°F (37.8°C). Liquid/solid stability is defined as: 100% minus percentage of the material that separated as a liquid after centrifuging.

As used herein, the term "comprising" means various components can be conjointly employed in the emulsified oil dressing products of the present invention. Accordingly, the term "comprising" encompasses the more restrictive terms "consisting essentially of" and "consisting of."

All percentages and proportions used herein are by weight unless otherwise specified.

B. Fat Component

An important component of the emulsified oil dressing products of the present invention is the fat component. The particular amount of fat component incorporated is selected to provide reduced calorie benefits, while at the same time maintaining a desired consistency and texture, especially with regard to spreadability of the product. The emulsified oil dressing products of the present invention can comprise from about 30 to 65% fat component. Preferred emulsified oil dressing products comprise from 40 to 50% fat component.

The fat component of these emulsified oil dressing products comprises a combination of both a low calorie fat material and a triglyceride oil. The particular proportions of low calorie fat material and triglyceride oil are selected to provide reduced calorie benefits, as well as desirable consistency and texture in the product. Fat components useful in the present invention can comprise from 50 to 90% low calorie fat

3

material and from 10 to 50% triglyceride oil. Preferred fat components comprise from 60 to 70% low calorie fat material and from 30 to 40% triglyceride oil.

As used herein, the term "low calorie fat material" refers to compositions of matter comprising an edible, wholly or partially digestible, fat material having the following physical and chemical properties: (a) a viscosity of from 0.5 to 800 poise at 100°F (37.8°C) and at a shear rate of 10 seconds$^{-1}$; (b) a liquid/solid stability of at least 30% at 100°F (37.8°C); and (c) a Solid Fat Content of not more than 30% at 98.6°F (37°C).

To measure the viscosity of a sample of the low calorie fat material, a plate and cone viscometer is used to record a rheogram, which is a plot of shear stress versus shear rate. Viscosity is then calculated from a point on the rheogram curve. At 100°F (37.8°C), the low calorie fat materials used in the fat component of the present invention typically have a viscosity in the range of from (0.5 to 800 poise) 0.05 to 80 Pa.s at a shear rate of 10 seconds$^{-1}$. Preferably, the low calorie fat materials have a viscosity of from 1 to 10 Pa.s (10 to 100 poise). Most preferred low calorie fat materials have a viscosity of from 1 to 5 Pa.s.(10 to 50 poise)

As discussed above, the present low calorie fat materials have a high liquid/solid stability inasmuch as the liquid portion of the fat materials does not readily separate from the solid portion. At 100°F (37.8°C), the low calorie fat materials have a liquid/solid stability of at least 30%, preferably at least 50%, more preferably at least 70%, and most preferably at least 90%.

Moreover, the present low calorie fat materials are sufficiently viscous and stable even at relatively low levels of solids. The Solid Fat Content (SFC) provides a reasonable approximation of the percent by weight solids of a particular fatty material at a given temperature. The present fat materials have a Solid Fat Content at 98.6°F (37°C) of not more than 30%, and preferably not more than 20%. Particularly preferred SFC values at 98.6°F (37°C) are in the range of from 4 to 20%, and most preferably in the range of from 8 to 14%.

Iodine Value is a measure of the degree of unsaturation of fatty acids. The low calorie fat materials preferably have an Iodine Value of from 30 to 70. These preferred low calorie fat materials typically have Iodine Values of from 40 to 60.

The low calorie fat materials used in the fat component of the present invention can be any of a variety of edible, wholly or partially nondigestible compounds. Preferably, the low calorie fat material is selected from the group consisting of polyol fatty acid polyesters and polycarboxylic acids esterified with fatty alcohols, and mixtures thereof. Preferred polyol fatty acid polyesters are sugar fatty acid polyesters, sugar alcohol fatty acid polyesters, and polyglycerol fatty acid polyesters, and mixtures thereof. More preferably, the low calorie fat material is selected from the group consisting of sugar fatty acid polyesters and sugar alcohol fatty acid polyesters, and mixtures thereof, the sugars and sugar alcohols containing from 4 to 8 hydroxyl groups prior to esterification.

Sugar or sugar alcohol fatty acid polyesters comprise sugars, or sugar alcohols, that are esterified with fatty acids. The term "sugar" is used herein in its conventional sense as generic to mono- and disaccharides. The term "sugar alcohol" is also used in its conventional sense as generic to the reduction product of sugars wherein the aldehyde or ketone group has been reduced to an alcohol. The fatty acid ester compounds are prepared by reacting a monosaccharide, disaccharide or sugar alcohol with fatty acids as discussed below.

Examples of suitable monosaccharides are those containing 4 hydroxyl groups such as xylose, arabinose, and ribose; the sugar alcohol derived from xylose, i.e., xylitol, is also suitable. The monosaccharide erythrose is not suitable since it only contains 3 hydroxyl groups; however, the sugar alcohol derived from erythrose, i.e. erythritol, contains 4 hydroxyl groups and is thus suitable. Among 5 hydroxyl-containing monosaccharides that are suitable for use herein are glucose, mannose, galactose, fructose, and sorbose. A sugar alcohol derived from sucrose, glucose, or sorbose, e.g., sorbitol, contains 6 hydroxyl groups and is also suitable as the alcohol moiety of the fatty acid ester compound. Examples of suitable disaccharides are maltose, lactose, and sucrose, all of which contain 8 hydroxyl groups.

In preparing sugar or sugar alcohol fatty acid polyesters of the present invention a sugar or sugar alcohol compound such as those identified above are esterified with a mixture of fatty acids having from 2 to about 24 (preferably from about 8 to about 22), carbon atoms. Examples of such fatty acids are acetic, butyric, caprylic, capric, lauric, myristic, myristoleic, palmitic, palmitoleic, stearic, oleic, elaidic, ricinoleic, linoleic, linolenic, eleostearic, arachidic, behenic, and erucic. The fatty acids can be derived from suitable naturally occurring or synthetic fatty acids and can be saturated or unsaturated, including positional and geometric isomers. The fat materials of this invention are usually, but not necessarily, mixed esters of fatty acids, rather than esters of a single type of fatty acid.

Fatty acids per se or naturally occurring fats and oils can serve as the source for the fatty acid portion of the sugar or sugar alcohol fatty acid ester. For example, rapeseed oil provides a good source for $C_{22}$ fatty acid. $C_{16}$-$C_{18}$ fatty acids can be provided by tallow, soybean oil, or cottonseed oil. Shorter chain fatty acids (e.g., $C_{12}$-$C_{14}$ fatty acids) can be provided by coconut, palm kernel, or babassu oils. Corn oil, lard, olive oil, palm oil, peanut oil, safflower seed oil, sesame seed oil, and sunflower seed oil, are examples of other natural oils which can serve as the source of the fatty acid component. The fatty acids can be saturated, unsaturated, or mixtures thereof. The unsaturated fatty acids can include positional and geometric isomers (e.g., cis and trans isomers), or mixtures thereof. In order to provide the required physical properties, the sucrose fatty acid polyesters are preferably esterified with particular kinds of fatty acids. Preferably, at least about 70% of the fatty acids are selected from the group consisting of lauric, myristic, palmitic, stearic, oleic, linoleic, and behenic acids and mixtures thereof.

The sugar or sugar alcohol fatty acid polyesters suitable for use herein can be prepared by a variety of methods well known to those skilled in the art. These methods include: transesterification of the sugar or sugar alcohol with methyl, ethyl or glycerol fatty acid esters using a variety of catalysts; acylation of the sugar or sugar alcohol with a fatty acid chloride; acylation of the sugar or sugar alcohol with a fatty acid anhydride; and acylation of the sugar or sugar alcohol with a fatty acid, per se. As an example, the preparation of sugar and sugar alcohol fatty acid esters is described in U.S. Pat. Nos. 2,831,854, 3,963,699, 4,517,360, and 4,518,772, all of which are incorporated by reference.

A characterizing feature of the sugar or sugar alcohol fatty acid polyesters useful in the fat component of the present invention is that they predominantly contain at least 4 fatty acid polyester groups. Sugar or sugar alcohol fatty acid polyester compounds that contain 3 or less fatty acid ester groups are digested in the intestinal tract much in the manner as ordinary triglyceride fats, but sugar or sugar alcohol fatty acid polyester compounds that contain four or more fatty acid ester groups are digested to a lesser extent and thus have the desired low calorie properties.

Highly preferred low calorie fat materials are sucrose fatty acid polyesters. Preferred sucrose fatty acid polyesters have the majority of their hydroxyl groups esterified with fatty acids. Preferably at least 85%, and most preferably at least 95%, of the sucrose fatty acid polyesters are selected from the group consisting of octaesters, heptaesters and hexaesters, and mixtures thereof. Preferably, no more than 35% of the esters are hexaesters or heptaesters, and at least 60% of the esters are octaesters. Most preferably at least 70% of the esters are octaesters. It is also most preferred that the polyesters have a total content of penta- and lower esters of not more than 3%.

Polyglycerol fatty acid polyesters can also be used as low calorie fat materials in the present invention. Polyglycerol is prepared by the polymerization of glycerine in the presence of either acid or base. The polyglycerols can contain from 2 to 20 glycerol moieties. Preferably, the polyglycerols will be those having from 2 to 15 glycerol moieties.

The polyglycerol compounds can be made by any synthetic method. See, for example, U.S. 3,968,169 to Seiden and Martin (1976). Esterification of the polyglycerols can also be done by any method known to the art, providing the resulting polyglycerol esters have the required rheological properties.

The "polycarboxylic acids esterified with fatty alcohols" are tricarboxylic and tetracarboxylic acids and higher. The polycarboxylic acids can be partially or wholly esterified with fatty alcohols. At least three fatty alcohol ester groups must be on an acid molecule to make it partially nondigestible.

As used herein, the term "triglyceride oil" refers to those triglyceride oils which are fluid or liquid above about 15°C. Although not a requirement, the triglyceride oil useful in the fat components of the present invention can include those which are fluid or liquid below 15°C. These triglyceride oils consist primarily of triglyceride materials, but can also include residual levels of other components such as mono- and diglycerides. To remain fluid or liquid at temperatures below 15°C, the triglyceride oil contains a minimum amount of glycerides having melting points higher than about 15°C so as to limit the solids increase when the triglyceride oil is cooled. It is desirable that the triglyceride oil be chemically stable and resistant to oxidation.

Suitable triglyceride oils can be derived from naturally occurring liquid vegetable oils such as cottonseed oil, soybean oil, safflower oil, corn oil, olive oil, coconut oil, peanut oil, rapeseed oil, canola oil (i.e., rapeseed oil low in erucic acid), sesame seed oil, sunflower seed oil, and mixtures thereof. Also suitable are liquid oil fractions obtained from palm oil, lard and tallow by, for example, graining or directed interesterification, followed by separation of the oils. Oils predominating in glycerides of unsaturated acids need some hydrogenation to maintain flavor, but care should be taken hot to greatly increase the amount of glycerides melting above 15°C. When oils are selected which have a larger amount of solids melting between 15° and 40°C than are desirable, it can be necessary to separate out the solids. For example, refined and slightly hydrogenated soybean oil is suitable, as well as refined cottonseed oil.

Triglyceride oils useful in the fat component of the present invention can include certain triglycerides in which one or two of the OH groups of the glycerol molecule have been replaced by acetyl, propionyl, butyryl, or caproyl radicals, and one or two of the remaining OH groups of the glycerol molecule have been replaced by acyl radicals of higher molecular weight saturated or unsaturated fatty acids having from 12 to 22 carbon atoms. For the purposes of the present invention, these glycerides containing both high and low molecular weight acid radicals are referred to as low molecular weight synthetic fats. The low molecular synthetic fats selected should be fluid or liquid at 15°C. In order to resist oxidation and to prevent rancidity, it is preferred to select low molecular synthetic fats in which there are a minimum of carbon-to-carbon double bonds in the higher molecular weight fatty acid radicals, and preferably not more than two double bonds in any single acid radical. Normally liquid fatty acids of the oleic acid series, having a single carbon-to-carbon double bond, are ideal for this purpose.

The fat component of the present invention can also be fortified with vitamins and minerals, particularly the fat-soluble vitamins. U.S. Patent 4,034,083 to Mattson (herein incorporated by reference) discloses polyol fatty acid polyesters fortified with fat-soluble vitamins. The fat-soluble vitamins include vitamin A, vitamin D, vitamin E, and vitamin K. Vitamin A is a fat-soluble alcohol of the formula $C_{20}H_{29}OH$. Natural vitamin A is usually found esterified with a fatty acid; metabolically active forms of vitamin A also include the corresponding aldehyde and acid. Vitamin D is a fat-soluble vitamin well known for use in the treatment and prevention of rickets and other skeletal disorders. Vitamin D comprises sterols, and there are at least 11 sterols with vitamin D-type activity. Vitamin E (tocopherol) is a third fat-soluble vitamin which can be used in the present invention. Four different tocopherols have been identified (alpha, beta, gamma and delta), all of which are oily, yellow liquids, insoluble in water but soluble in fats and oils. Vitamin K exists in at least three forms, all belonging to the group of chemical compounds known as quinones. The naturally occurring fat-soluble vitamins are $K_1$ (phylloquinone), $K_2$ (menaquinone), and $K_3$ (menadione). The amount of the fat-soluble vitamins employed herein to fortify the present fat component can vary. If desired, the fat component can be fortified with a recommended daily allowance (RDA), or increment or multiple of an RDA, of any of the fat-soluble vitamins or combinations thereof. It is preferred that the fat component be supplemented with 0.88 to 1.1 mg. vitamin E in the form of d-alpha-tocopherol acetate per gram of sucrose polyesters.

Vitamins that are nonsoluble in fat can similarly be included in the present low calorie fat materials. Among these vitamins are the vitamin B complex vitamins, vitamin C, vitamin G, vitamin H, and vitamin P. The minerals include the wide variety of minerals known to be useful in the diet, such as calcium, magnesium, and zinc. Any combination of vitamins and minerals can be used in the present fat component.

C. Salad Dressing Paste Component

Another key component of the emulsified oil dressing products of the present invention is the salad dressing paste component. This salad dressing paste component permits the inclusion of higher levels of low calorie fat materials in the fat component, while maintaining the desired consistency and texture of the product. This paste component is included in a suitable amount. What constitutes "a suitable amount" will depend on the level and composition of the fat component, the particular consistency and texture desired for the emulsified oil dressing product, and similar factors. Usually, the paste component (including water) comprises from 30 to 60% of the emulsified oil dressing product. Preferably, the paste component comprises from 35 to 45% of the product.

A particularly important ingredient of this paste component is a suitable thickener selected from starches, edible gums, and mixtures of these materials. Suitable edible gums for use herein include xanthan gum, gum acacia, carob bean gum, guar gum, gum karaya, gum tragacanth, carrageenan, locust bean gum, pectin, alginic acid, as well as the respective sodium and calcium salts and 1,2-propylene glycol esters of alginic acid, various cellulose derivatives such as carboxymethylcellulose, carboxyethylcellulose, hydroxypropylcellulose, methylcellulose and microcrystalline cellulose, as well as mixtures of these edible gums. Suitable starches for use herein include food starch, modified food starch tapioca flour, wheat flour, rye flour, potato flour, as well as combinations of these starches. Preferred thickeners for use in salad dressing paste components of the present invention are food starch and modified food starch, and especially combinations of food starch and modified food starch.

The particular amount of thickener included in the emulsified oil dressing product is highly dependent upon whether it is an edible gum or a starch. In the case of starches, the thickener comprises from 2 to 5% of the product. Preferably, starch comprises from 2 to 3% of the product. Edible gum thickeners are typically present at lower levels.

6

Besides a suitable thickener, the salad dressing paste component can comprise other optional, but desirable, ingredients. One of these ingredients is a nutritive carbohydrate sweetener or sweeteners. Suitable nutritive sweeteners include sucrose, glucose, fructose, maltose, high fructose corn syrups, and high maltose corn syrups. The amount of nutritive sweetener included is selected to provide the desired sweetness intensity in the emulsified oil dressing product. Usually, the nutritive sweetener comprises from 0.5 to 5% of the product. Preferably, the nutritive sweetener comprises from 0.5 to 2.5 of the product.

If an extra calorie reduction benefit is desired, noncaloric or reduced calorie sweeteners can be used wholly or partially in place of the nutritive carbohydrate sweetener. Suitable noncaloric or reduced calorie sweeteners include, but are not limited to, aspartame; saccharin; alitame, thaumatin; dihydrochalcones; cyclamates; steviosides; glycyrrhizins, synthetic alkoxy aromatics, such as Dulcin and P-4000; sucrolose, suosan; miraculin; monellin; sorbitol; xylitol; talin; cycloexylsulfamates; substituted imidazolines; synthetic sulfamic acids such as acesulfame, acesulfam-K and n-substituted sulfamic acids; oximes such as perilartine; rebaudioside-A; peptides such as aspartyl malonates and succanilic acids; dipeptides; amino acid based sweeteners such as gem-diaminoalkanes, meta-aminobenzoic acid, L-aminodicarboxylic acid alkanes, and amides of certain alpha-aminodicarboxylic acids and gem-diamines; and 3-hydroxy-4-alkyloxyphenyl aliphatic carboxylates or heterocyclic aromatic carboxylates. The particular amount of noncaloric or reduced sweetener included in the salad dressing paste component will depend on the sweetness intensity of the particular sweetener and the sweetness effect desired.

Another desirable optional ingredient present in the salad dressing component is a sequestrant(s). Suitable sequestrants include, but are not limited to, calcium disodium ethylene diamine tetraacetate (EDTA), and disodium EDTA. These sequestrants are typically included in salad dressing paste components to preserve the color and/or flavor of the emulsified oil dressing product. These sequestrants are typically included in an amount of from 0.004 to 0.006% of the product.

Other ingredients typically included in the salad dressing paste components are salt, preservatives and spices/flavorants. Suitable preservatives include sodium and potassium benzoate. Suitable spices and flavorants include mustard powder, onion powder, garlic powder, oleoresin paprika, oil of clary sage, and egg flavors. The salt, preservatives and spices/flavorants are included in amounts to provide the saltiness, preservative properties and flavor/aroma properties desired. If desired, bulking agents such as maltodextrins or polydextrose can be included in appropriate amounts in the salad dressing paste component.

The balance of the salad dressing paste component comprises water. The amount of water included in the salad dressing paste component depends on the particular consistency and texture desired in the product. Usually, water comprises from 25 to 35% of the product. Preferably, water comprises from 27 to 33% of the product.

D. Egg Yolk Component, Acid/Acidifying Component, Crystallization Inhibitors and Other Optional Ingredients.

In addition to the fat component and salad dressing paste component, the emulsified oil dressing products of the present invention include other components typically present in salad dressing products. For example, an egg yolk component is typically included in such products. This egg yolk component can comprise liquid egg yolks, frozen egg yolks, dried egg yolks, liquid whole eggs, frozen whole eggs, sugared frozen egg yolks, salted frozen egg yolks, dried whole eggs, or combinations of the foregoing egg yolk ingredients. This egg yolk component usually comprises from 5 to 15% of the emulsified oil dressing product. Preferably, this egg yolk component comprises from 11 to 13% of the product.

An acid/acidifying component is also typically included in emulsified oil dressing products. Suitable acidifying ingredients include vinegar or any vinegar diluted with water such as cider vinegar and white vinegar, lemon juice and/or lime juice, citric and/or malic acid, and mixtures of these acidifying ingredients. Lemon juice, lime juice, citric acid and malic acid are typically used in combination with vinegar as the acidifying component. Usually, the acid/acidifying component comprises from 3 to 12% of the emulsified oil dressing product. Preferably, the acidifying component comprises from 3 to 5% of the product.

Other optional components typically present in emulsified oil dressing products include crystallization inhibitors such as, but not limited to, oxystearin, lecithin, lower sucrose esters of fatty acids (i.e., sucrose mono-, di- or tri- esters), and polyglycerol esters of fatty acids, and monosodium glutamate. These optional components can be included in the emulsified oil dressing products in amounts typically used for salad dressing products.

E. Preparation of Emulsified Oil Dressing Product.

The emulsified oil dressing products of the present invention can be prepared generally by any standard method for preparing conventional salad dressing products. For example, the salad dressing paste component is prepared by mixing together the thickener and water, heating this mixture to a temperature of from 87.8 to 93.3°C (about 190 to 200°F)° to cook the paste component, and then adding the remaining paste ingredients (e.g., sweetener, sequestrant, salt, preservative, spices/flavorants). The egg yolk ingredients are added to this cooked salad dressing paste component and then mixed. The low calorie fat materials, triglyceride oil and any crystallization inhibitor are then added to this cooked paste component/egg yolk mixture. (It is sometimes necessary to premelt the low calorie fat material and crystallization inhibitor prior to addition). After the low calorie fat material, triglyceride oil and crystallization inhibitor have been mixed in, the acidifying ingredients (e.g. vinegar(s), and lemon juice) are added and mixed in. The resulting emulsified oil dressing product can then be packaged in an appropriate container and stored at ambient temperatures. Preferably, the preparation of the emulsified oil dressing products of the present invention is conducted under an inert atmosphere (e.g. nitrogen).

F. Analytical Methods

1. Viscosity Measurement

a. Sample Preparation

The low calorie fat material is melted in a hot water bath at greater than 190°F (87.8°C). The melted material is thoroughly mixed and a 10 gram sample is weighed into a vial. The vial is covered and then heated in a hot water bath to greater than 190°F (87.8°C). The sample is then allowed to recrystallize at 100°F (37.8°C) in a constant temperature room. After the 24 hour time period has elapsed, the sample is taken to the viscometer and the viscosity is measured.

b. Ferranti-Shirley Viscometer

Operation Procedure

A Ferranti-Shirley viscometer is used for the viscosity measurement. A cone is put into place, and the viscometer temperature is adjusted to 100°F (37.8°C). The chart recorder is calibrated, and the gap between the cone and plate is set. The cone speed is checked, and the cone and plate temperatures are equilibrated to 100°F (37.8°C). The panel controls are set. Sufficient sample is placed between the plate and the cone so that the gap is completely filled. The temperature is allowed to stabilize at 100°F (37.8°C) for about 30 seconds. The test is started by selecting the rpm for 10 seconds$^{-1}$ shear rate and record on the strip chart recorder. The shear stress is recorded at 10 minutes after the point at which the shear stress reaches the maximum value. Viscosity (poise) = shear stress (dynes/cm$^2$) divided by shear rate (second$^{-1}$).

2. Liquid/Solid Stability Measurement

The sample of the low calorie fat material is heated in a hot water bath at greater than 190°F (87.8 °C) until it completely melts and is then thoroughly mixed. The sample is then poured into centrifuge tubes at 100°F (37.8°C). The samples then are allowed to recrystallize for 24 hours at 100°F (37.8°C) in a constant temperature room. The samples are then centrifuged at 60,000 rpm for one hour at 100°F (37.8°C). The force on the samples is 486,000 g's. The percent liquid separated is then measured by comparing the relative heights of the liquid and solid phases. Liquid/solid stability (%) = 100 x (total volume of sample - volume of liquid that separated)/total volume of sample.

3. Solid Fat Content Measurement

Before determining SFC values, the sample of the low calorie fat material is heated to a temperature of 158°C (70°F) or higher for at least 0.5 hours or until the sample is completely melted. The melted sample is then tempered at a temperature of 40°F (4.4°C) for at least 72 hours. After tempering, the SFC value of the sample at a temperature of 98.6°F (37°C) is determined by pulsed nuclear magnetic resonance (PNMR). The method for determining SFC values by PNMR is described in Madison and Hill, J. Amer. Oil Chem. Soc., Vol. 55 (1978), pp. 328-31 (herein incorporated by reference). Measurement of SFC by PNMR is also described in A.O.C.S. Official Method Cd. 16-81, Official Methods and Recommended Practices of The American Oil Chemists Society, 3rd. Ed., 1987 (herein incorporated by reference).

4. Fatty Acid Composition of Polyol Polyesters

Fatty acid composition (FAC) of polyol polyester low calorie fat materials is determined by gas chromatography, using a Hewlett-Packard Model S712A gas chromatograph equipped with a thermal conductivity detector and a Hewlett-Packard Model 7671A automatic sampler. The chromatographic method used is described in Official Methods and Recommended Practices of the American Oil Chemists Society, 3rd Ed., 1984, Procedure Ce 1-62.

5. Ester Distribution of Polyol Polyesters

The relative distribution of the individual octa-, hepta-, hexa- and penta- esters, as well as collectively the tetra- through mono- esters, of polyol polyester low calorie fat materials can be determined using normal-phase high performance liquid chromatograph (HPLC). A silica gel-packed column is used in this method to separate the polyester sample into the respective ester groupings noted above. Hexane and methyl-t-butyl ether are used as the mobile phase solvents. The ester groupings are quantitated using a mass detector (i.e., an evaporative light scattering detector). The detector response is measured and then normalized to 100%. The individual ester groups are expressed as a relative percentage.

Specific Illustration of the Preparation of a Salad Dressing Product of the Present Invention

A salad dressing product according to the present invention was prepared from the following ingredients:

| Ingredient | Percent |
|---|---|
| Paste Component | (38.7300) |
| Water | 29.6260 |
| Maltrin M100* | 3.5203 |
| Purity 420A starch | 1.9892 |
| Salt | 1.4243 |
| Melojel-90 starch | 0.7957 |
| Sucrose | 0.7957 |
| Mustard seed | 0.3978 |
| Sodium benzoate | 0.0756 |
| Artificial egg flavor | 0.0354 |
| Garlic powder | 0.0318 |
| Onion powder | 0.0318 |
| EDTA | 0.0048 |
| Oleoresin paprika | 0.0012 |
| Oil clary sage | 0.0004 |
| | |
| Fat Component | (45.0000) |
| Low calorie fat material | 30.0000 |
| Canola oil | 15.0000 |
| | |
| 10% sugared egg yolks | 12.0000 |
| Caprol E.T.** | 0.1000 |
| Vitamin E | 0.0330 |
| 50 grain cider vinegar | 0.5000 |
| 110 grain distilled vinegar | 2.9200 |
| Lemon juice | 0.7500 |
| | 100.0330 |

*Low DE maltodextrin
**Polyglycerol ester crystallization inhibitor.

The low calorie fat material was a sucrose polyester composition made by esterifying sucrose with a mixture of methyl esters derived from a 45/55 blend of touch-hardened soybean oil (I.V. 107) and fully hydrogenated soybean oil (I.V. 8). This composition had the following physical and chemical properties:

| | |
|---|---|
| <u>Viscosity</u> (100°F, 37.8°C) | 4.29 Pa.s (42.9 poise) |
| <u>Liquid/Solid Stability</u> (100°, 37.8°C) | 100% |
| <u>SFC</u> (98.6°F, 37°C) | 12.6% |
| <u>I.V.</u> | 46.5 |

FAC

| | |
|---|---|
| $C_{16:0}$ | 9.6% |
| $C_{18:0}$ | 52.7% |
| $C_{18:1}$ | 21.3% |
| $C_{18:2}$ | 14.7% |
| $C_{18:3}$ | 1.0% |
| $C_{20:0}$ | 0.5% |
| $C_{22:0}$ | 0.2% |

<u>Esters</u>

| | |
|---|---|
| Octa | 82.1% |
| Hepta | 17.9% |

All of the paste ingredients were slurried in a steam jacketed kettle. The contents of the kettle were heated to a temperature of 190°F (87.8°C) and then held at this temperature for 10 minutes. Water was added to this cooked paste to replace the water which had been lost during heating. This cooked paste was added to an Abbe' mixer and the scraper blades then started. Egg yolks were added to the mixer and the resulting mixture sheared for 15 seconds. The low calorie fat material and Caprol E.T. (preheated to 160°F (71.1°C)), as well as the canola oil, were slowly added with mixing and then the resulting mixture was sheared for 15 seconds. Next, the vinegars and lemon juice were added to the contents of the mixer. The resulting mixture was shear mixed for 1-1/2 minutes at a temperature of 110°F (43.3°C). The resulting salad dressing product was discharged from the mixer, filled into quart jars, capped and then stored at a temperature of 70°F (21.1°C).

**Claims**

1. An emulsified oil dressing product, characterized in that it comprises:
   a. from 30 to 65% of a fat component comprising:
      1. from 50 to 90% of an edible, wholly or partially digestible low calorie fat material having:
         (a) a viscosity of from 0.5 to 800 Poise (0.05 to 80 Pa.s) at 100°F (37.8°C) and at a shear rate of 10 seconds$^{-1}$;
         (b) a liquid/solid stability of at least 30% at 100°F (37.8°C); and
         (c) a Solid Fat Content of not more than 30% at 98.6°F (37°C);
      2. from 10 to 50% of a triglyceride oil;
   b. from 30 to 60% of a salad dressing paste component comprising:
      1. a thickener selected from the group consisting of starches, edible gums, and mixtures thereof; and
      2. water.

2. The product of Claim 1 characterized in that said salad dressing paste component comprises from 35 to 45% of the product.

3. The product of any of Claims 1 to 2 characterized in that said thickener comprises from 2 to 5% of the product, preferably from 2 to 3% of the product, and is selected from the group consisting of food starch, modified food starch, tapioca flour, wheat flour, rye flour, potato flour and mixtures thereof,

EP 0 375 239 B1

preferably from the group consisting of foodstarch and modified foodstarch, and preferably the product further comprises a nutritive carbohydrate sweetener, preferably selected from the group consisting of sucrose, glucose, fructose, maltose, high fructose corn syrups and high maltose corn syrups and high maltose corn syrup, in an amount of from 0.5 to 5% of the product, preferably in an amount of from 0.5 to 2.5% of the product, and most preferably the product comprises water in amount of from 25 to 35% of the product.

4. The product of any of Claims 1 to 3 characterized in that it further comprises from 5 to 15%, preferably from 11 to 13%, of an egg yolk component and from 3 to 12%, preferably from 3 to 5%, of an acid/acidifying component.

5. The product of any of Claims 1 to 4 characterized in that said low calorie fat material is a sugar fatty acid polyester or sugar alcohol fatty acid polyester comprising a sugar or sugar alcohol containing from 4 to 8 hydroxy groups, preferably sucrose, and at least 4 fatty acid ester groups, each fatty acid ester group containing from 2 to 24 carbon atoms, preferably from 8 to 22 carbon atoms, more preferably at least 70% fatty acid groups selected from the group consisting of lauric, myristic, palmitic, stearic, oleic, linoleic, and behenic acids, and mixtures thereof, and most preferably an octaester content of at least 70%.

6. The product of any of Claims 1 to 5 characterized in that said low calorie fat material has a viscosity of from 1 to 10 Pa.s. (10 to 100 poise), preferably from 1 to 5 Pa.s. (10 to 50 poise), liquid/solid stability of at least 70%, preferably at least 90%, and a Solid Fat Content of no more than 20%, preferably from 8 to 14%.

7. The product of any of Claims 1 to 6 characterized in that said fat component comprises from 40 to 50% of the product, said fat component preferably comprising from 60 to 70% of said low calorie fat material and from 30 to 40% of said triglyceride oil, said triglyceride oil preferably being selected from the group consisting of cottonseed oil, soybean oil, safflower oil, corn oil, olive oil, coconut oil, peanut oil, rapeseed oil, canola oil, sesame seed oil, sunflower seed oil and mixtures thereof.

**Patentansprüche**

1. Dressingprodukt auf der Basis von emulgiertem Öl, dadurch gekennzeichnet, daß es enthält:
   a. 30 bis 65 % an einer Fettkomponente, welche umfaßt:
      1. 50 bis 90 % an einem eßbaren, ganz oder teilweise verdaulichen Fettmaterial mit niedrigem Kaloriengehalt, welches aufweist:
         (a) eine Viskosität von 0,5 bis 800 P (0,05 bis 80 Pa.s) bei 100°F (37,8°C) bei einem Schergefälle von 10 sec$^{-1}$;
         (b) eine Flüssig-/Fest-Stabilität von wenigstens 30 % bei 100°F (37,8°C); und
         (c) einen Gehalt an festem Fett von nicht mehr als 30 % bei 98,6°F (37°C);
      2. 10 bis 50 % eines Triglyceridöles;
   b. 30 bis 60 % einer pastenförmigen Komponente für Salatsoßen, welche enthält:
      1. ein Verdickungsmittel, welches aus einer Gruppe ausgewählt ist, die aus Stärken, eßbaren Gummen und Gemischen hievon besteht; und
      2. Wasser.

2. Produkt nach Anspruch 1, dadurch gekennzeichnet, daß die pastenförmige Komponente für Salatsoßen 35 bis 45 % des Produktes ausmacht.

3. Produkt nach Anspruch 1 oder 2, dadurch gekennzeichnet, daß das Verdickungsmittel 2 bis 5 % des Produktes, vorzugsweise 2 bis 3 % des Produktes ausmacht, und daß es aus einer Gruppe ausgewählt ist, welche aus Nahrungsmittelstärke, modifizierter Nahrungsmittelstärke, Tapioka-, Weizen-, Roggen-, Kartoffelmehl und Gemischen hievon besteht, und daß es vorzugsweise aus einer Gruppe ausgewählt ist, die aus Nahrungsmittelstärke und modifizierter Nahrungsmittelstärke besteht, und daß das Produkt vorzugsweise weiterhin ein Süßungsmittel auf der Basis eines nahrhaften Kohlenhydrates enthält, welches vorzugsweise aus einer Gruppe ausgewählt ist, die aus Saccharose, Glukose, Fruktose, Maltose, Maissirupen mit hohem Fruktosegehalt und Maissirupen mit hohem Maltosegehalt, und Maissirup mit hohem Maltosegehalt besteht, und zwar in einer Menge von 0,5 bis 5 % des Produktes,

12

vorzugsweise in einer Menge von 0,5 bis 2,5 % des Produktes, und daß das Produkt in höchstem Maße bevorzugt Wasser in einer Menge von 25 bis 35 % des Produktes enthält.

4. Produkt nach einem der Ansprüche 1 bis 3, dadurch gekennzeichnet, daß es weiterhin 5 bis 15 %, vorzugsweise 11 bis 13 % einer Eidotter-Komponente und 3 bis 12 %, vorzugsweise 3 bis 5 %, einer Säure-/ansäuernden Komponente enthält.

5. Produkt nach einem der Ansprüche 1 bis 4, dadurch gekennzeichnet, daß das Fettmaterial mit niedrigem Kaloriengehalt ein Zuckerfettsäurepolyester oder ein Zuckeralkoholfettsäurepolyester mit einem Gehalt an einem Zucker oder Zuckeralkohol mit einem Gehalt an 4 bis 8 Hydroxylgruppen, vorzugsweise an Saccharose, und mit einem Gehalt an wenigstens 4 Fettsäureestergruppen ist, wobei jede Fettsäureestergruppe 2 bis 24 Kohlenstoffatome, vorzugsweise 8 bis 22 Kohlenstoffatome enthält, und daß das Fettmaterial in höherem Maße bevorzugt wenigstens 70 % an Fettsäuregruppen aufweist, welche aus einer Gruppe ausgewählt sind, die aus Laurin-, Myristin-, Palmitin-, Stearin-, Öl-, Linol- und Behensäure und Gemischen hievon besteht, und daß das Fettmaterial in höchstem Maße bevorzugt einen Octaestergehalt von wenigstens 70 % aufweist.

6. Produkt nach einem der Ansprüche 1 bis 5, dadurch gekennzeichnet, daß das Fettmaterial mit niedrigem Kaloriengehalt eine Viskosität von 1 bis 10 Pa.s (10 bis 100 P), vorzugsweise von 1 bis 5 Pa.s (10 bis 50 P), eine Flüssig-/Fest-Stabilität von wenigstens 70 %, vorzugsweise von wenigstens 90 %, und einen Gehalt an festem Fett von nicht mehr als 20 %, vorzugsweise von 8 bis 14 %, aufweist.

7. Produkt nach einem der Ansprüche 1 bis 6, dadurch gekennzeichnet, daß die Fettkomponente 40 bis 50 % des Produktes ausmacht, daß die Fettkomponente vorzugsweise 60 bis 70 % an dem Fettmaterial mit niedrigem Kaloriengehalt und 30 bis 40 % an dem Triglyceridöl enthält, wobei dieses Triglyceridöl vorzugsweise aus einer Gruppe ausgewählt ist, die aus Baumwollsamen-, Sojabohnen-, Saflor-, Mais-, Oliven-, Kokosnuß-, Erdnuß-, Rüb-, Canola-, Sesamsamen-, Sonnenblumensamenöl und Gemischen hievon besteht.

## Revendications

1. Produit d'assaisonnement à base d'huile émulsionnée, caractérisé en ce qu'il comprend :
   a. de 30 à 65% d'un constituant gras comprenant :
      1. de 50 à 90% d'une matière grasse basses calories comestible, totalement ou partiellement non digestible, présentant :
         (a) une viscosité de 0,05 à 80 Pa.s (0,5 à 800 poises) à 100 °F (37,8 °C) et à une vitesse de cisaillement de 10 s$^{-1}$;
         (b) une stabilité liquide/solide d'au moins 30% à 100 °F (37,8 °C); et
         (c) une teneur en matières grasses solides d'au plus 30% à 98,6 °F (37 °C);
      2. de 10 à 50 % d'une huile triglycéride;
   b. de 30 à 60% d'un constituant pâteux d'assaisonnement pour salades, comprenant :
      1. un épaississant choisi dans le groupe constitué par les amidons, les gommes comestibles, et leurs mélanges; et
      2. de l'eau.

2. Produit selon la revendication 1, caractérisé en ce que ledit constituant pâteux d'assaisonnement pour salades constitue de 35 à 45% du produit.

3. Produit selon l'une quelconque des revendications 1 et 2, caractérisé en ce que ledit épaississant constitue de 2 à 5% du produit, de préférence de 2 à 3% du produit, et est choisi dans le groupe constitué par l'amidon alimentaire, l'amidon alimentaire modifié, la farine de tapioca, la farine de froment, la farine de seigle, la farine de pomme de terre et des mélanges de ceux-ci, de préférence dans le groupe constitué par l'amidon alimentaire et l'amidon alimentaire modifié, et de préférence le produit comprend aussi un édulcorant nutritif de type hydrate de carbone, choisi de préférence dans le groupe constitué par le saccharose, le glucose, le fructose, le maltose, les sirops de maïs à haute teneur en fructose et les sirops de maïs à haute teneur en maltose, dans une proportion de 0,5 à 5% du produit, de préférence dans une proportion de 0,5 à 2,5% du produit et, tout particulièrement, le produit comprend de l'eau dans une proportion de 25 à 35% du produit.

**4.** Produit selon l'une quelconque des revendications 1 à 3, caractérisé en ce qu'il comprend aussi de 5 à 15%, de préférence de 11 à 13%, d'un constituant jaune d'oeuf et de 3 à 12%, de préférence de 3 à 5%, d'un constituant acide/acidifiant.

**5.** Produit selon l'une quelconque des revendications 1 à 4, caractérisé en ce que ladite matière grasse basses calories est un polyester d'acide gras de sucre ou un polyester d'acide gras d'alcool de sucre comprenant un sucre ou un alcool de sucre contenant de 4 à 8 groupes hydroxyle, de préférence le saccharose, et au moins 4 groupes ester d'acide gras, chaque groupe ester d'acide gras contenant de 2 à 24 atomes de carbone, de préférence de 8 à 22 atomes de carbone, mieux encore au moins 70% de groupes acide gras choisis dans le groupe constitué par les acides laurique, myristique, palmitique, stéarique, oléique, linoléique et béhénique, et des mélanges de ceux-ci, et mieux encore une teneur en octa-ester d'au moins 70%.

**6.** Produit selon l'une quelconque des revendications 1 à 5, caractérisé en ce que ladite matière grasse basses calories présente une viscosité de 1 à 10 Pa.s (10 à 100 poises), de préférence de 1 à 5 Pa.s (10 à 50 poises), une stabilité liquide/solide d'au moins 70%, de préférence d'au moins 90%, et une teneur en matières grasses solides d'au plus 20%, de préférence de 8 à 14%.

**7.** Produit selon l'une quelconque des revendications 1 à 6, caractérisé en ce que le constituant gras constitue de 40 à 50% du produit, ledit constituant gras comprenant de préférence de 60 à 70% de ladite matière grasse basses calories et de 30 à 40% de ladite huile triglycéride, ladite huile triglycéride étant de préférence choisie dans le groupe constitué par l'huile de graine de coton, l'huile de soja, l'huile de carthame, l'huile de maïs, l'huile d'olive, l'huile de coprah, l'huile d'arachide, l'huile de colza, l'huile de canola, l'huile de graine de sésame, l'huile de graine de tournesol, et des mélanges de celles-ci.